(19) Europäisches Patentamt

European Patent Office

Office européen des brevets

(11) **EP 1 480 892 B1**

(12) **EUROPEAN PATENT SPECIFICATION**

(45) Date of publication and mention
of the grant of the patent:
**22.06.2005 Bulletin 2005/25**

(51) Int Cl.⁷: **B65D 65/40**, B32B 29/08,
E04C 2/32

(21) Application number: **03704898.0**

(22) Date of filing: **06.03.2003**

(86) International application number:
**PCT/IB2003/000832**

(87) International publication number:
**WO 2003/074384 (12.09.2003 Gazette 2003/37)**

(54) **A PACKAGING MATERIAL OF THE CORRUGATED CARDBOARD TYPE**

VERPACKUNGSMATERIAL AUS WELLPAPPE

MATERIAU D'EMBALLAGE DU TYPE EN CARTON ONDULE

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK RO**

(30) Priority: **07.03.2002 DK 200200347**

(43) Date of publication of application:
**01.12.2004 Bulletin 2004/49**

(73) Proprietor: **Inter Ikea Systems B.V.**
**2616 Delft (NL)**

(72) Inventor: **RYDBERG, Tommy**
**S-566 32 Habo (SE)**

(74) Representative: **Noergaard, Tage et al**
**Chas. Hude A/S,**
**33 H.C. Andersens Boulevard**
**1780 Copenhagen V (DK)**

(56) References cited:
**EP-A- 0 424 526          EP-A- 0 704 380
WO-A-00/71277          FR-A- 2 615 446
US-B1- 6 207 242**

**Description**

Technical Field.

A packaging material of the corrugated cardboard type as stated in the preamble of claim 1.

Background Art

It is known to manufacture corrugated cardboard which includes a plane paper layer. A corrugated auxiliary paper layer is glued onto the plane paper layer, and the corrugations of said auxiliary paper layer present an amplitude perpendicular to the direction of propagation of the packaging material. All the ridges are arranged as rectilinear parallel corrugations. However, problems are involved in forming folding lines in the material as a folding along a specific line has a tendency to be staggered relative to the adjacent vales. In addition, a printing by means of raster on the plane paper layer implies due to the washboard effect that the printed colours opposite the ridges are of a slightly different tint than the colours opposite the wave. In addition, the tearresistance parallel to the waves is weak. The rigidity of the material and the capability of absorbing impacts of said material are not so good either as said material is not sufficiently stiff.

EP-A-0424526, upon which the preamble of claim 1 is based, (Figs. 4 and 6) discloses a packaging material with only one auxiliary corrugated layer.

WO-A-071277 discloses a sheet and strip material with only one corrugated auxiliary layer.

US-A-6207242 (Fig. 3) discloses a packing material with two auxiliary corrugated layers of the same type, the phase displacement between corresponding waves being $90°$ or $\frac{\pi}{2}$.

US-A-4012276 discloses a packaing material with two auxiliary corrugated layers of a different type, a wave phase displacement existing between said layers of a different type.

Brief Description of the Invention

The object of the invention is to provide a packaging material of the above type which is more suited for being subjected to a printing than hitherto known, which is more stiff than hitherto known, and which presents an improved tear resistance.

The packaging material according to the invention is characterised in the features stated in the characterising clause of claim 1. The two auxiliary corrugated layers are of the same type. As a result, the packaging material becomes more stiff than hitherto known, viz flexurally rigid, without the lightness and voluminocity of the material being affected. The folding of such waves requires a considerable force. In addition, the material turned out to be highly suited for imprints. The tear resistance has been increased because the possibility of tearing up the material along a wave has been reduced. The folding lines are very distinct as they always extend across some ridges.

According to the invention, the plane paper layer and the auxiliary paper layer may be of the same thickness, preferably between 0.05 and 0.3 mm, and preferably be approximately 0.1 mm, where the auxiliary paper layer may be of a weight of 50 to 250 g/m$^2$, especially 70 to 150 g/m$^2$. The resulting packaging material is very durable.

Moreover, in the packaging material according to the invention a starch-based glue or cold-water glue may be used for the lamination of the layers. Such a packaging material turned out to present a high cohesive power and a long durability.

According to the invention, the surface of each auxiliary paper layer may follow a face substantially corresponding to the functional expression:

$$z(x, y) = a\sin(\frac{2\pi}{\lambda_1} x + \frac{\pi}{2} + b\sin \frac{2\pi}{\lambda_2}y)$$

where a and $\lambda_1$ represent the amplitude and the wavelength, respectively, of the waves perpendicular to the plane of propagation of the auxiliary paper layer, and where b and $\lambda_2$ represent the amplitude and the wavelength, respectively, of the waves in the plane of said auxiliary paper layer, the ratio $\frac{a}{b}$ of the amplitudes for the two types of waves being be in the range of 0.10 to 0.60, preferably 0.15 to 0.50, especially 0.22 corresponding to a = 0.5 mm and b = 2.25 mm This embodiment of the packaging material turned out to be particularly stiff and suited for transportation oflarge separate furniture parts and plates.

Furthermore, the ratio $\frac{\lambda_1}{\lambda_2}$ of the wavelengths for the two types of waves may according to the invention be in the range of 0.09 to 0.20, preferably 0.15 corresponding to $\lambda_1$ = 3.5 mm and $\lambda_2$ = 23.5 mm. This has proved particularly advantageous.

Finally, the waves of at least one type of waves may according to the invention be rather flat on the sides in such a manner that said waves are substantially serrated where the ridges and the grooves are slightly rounded, or the waves may be substantially square. As a result, an inexpensive manufacture of the auxiliary paper layer is obtained because the pressing tools used for pressing the auxiliary paper layer into shape can be manufactured at a lower price than hitherto known.

Brief Description of the Drawing

The invention is explained in detail below with reference to the drawing, in which

Fig. 1 is a perspective view of a portion of a packaging material according to the invention, where a small phase displacement appears between the waves presenting an amplitude perpendicular to the first auxiliary paper layer and the waves presenting an amplitude perpendicular to the second auxiliary paper layer, and

Fig. 2 discloses in an XYZ-coordinate system an ideal embodiment of the waves of an auxiliary paper layer,

Best Mode for Carrying Out the Invention

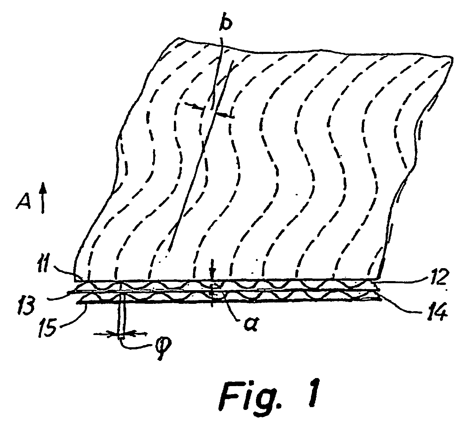

The portion of the packaging material shown in Fig. 1 is formed as a laminate including a plane paper layer 11 and an auxiliary paper layer .12 arranged below the layer 11. Below the auxiliary layer 12 there is arranged a second plane paper layer 13. Below the latter there is arranged a second auxiliary paper layer 14 and optionally a third plane paper layer 15. The auxiliary paper layers include waves presenting an amplitude $\underline{a}$ perpendicular to the plane of propagation of the auxiliary paper layer, viz. follow the direction parallel to the arrow A. The wave top of these waves form in the auxiliary paper layers 12 and 14 a system of substantially parallel waves presenting amplitudes $\underline{b}$ in the plane of propagnation of the auxiliary paper layers. The latter waves can also be called oscillating in parallel.

The plane paper layers 11 and 13 and the auxiliary paper layers 12 and 14 may be of the same thickness, preferably between 0.05 and 0.3 mm, such as 0.1 mm. Each auxiliary paper layer can for instance be of a weight of 50 to 250 g/m$^2$, especially 70 to 150 g/m$^2$.

A glue, such as a starch-based glue or a cold-water glue, can for instance be used for the lamination of the layers.

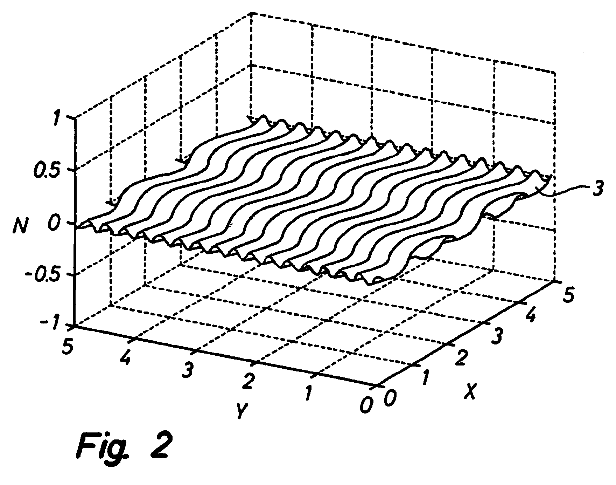

As shown in Fig. 2 the surface of each auxiliary paper layer 12 and 14 can follow a face substantially corresponding to the mathematical functional expression:

$$z(x,y) = a\sin(\frac{2\pi}{\lambda_1}\,x + \frac{\pi}{2} + b\sin\frac{2\pi}{\lambda_2}y)$$

where a and $\lambda_1$ represent the amplitude and the wavelength, respectively, of the waves perpendicular to the plane of propagation of each auxiliary paper layer 13, and where b and $\lambda_2$ represent the amplitude and the wavelength, respectively, of the waves formed by the wave tops of the above-mentioned waves and presenting an amplitude in the plane of said auxiliary paper layers 12 or 14. The expression applies to a rectilinear XYZ-coordinate system.

The ratio $\frac{a}{b}$ of the amplitudes for the two types of waves can be in the range of 0.10 to 0.60, preferably 0.15 to 0.50, and especially 0.22 corresponding to a = 0.5 mm and b = 2.25 mm.

The ratio $\frac{\lambda_1}{\lambda_2}$ of the wavelengths for the two types of waves can be in the range of 0.09 to 0.20, and preferably be approximately 0.15 corresponding to $\lambda_1$ = 3.5 mm and $\lambda_2$ = 23.5 mm.

As far as the waves are concerned which present an amplitude $\underline{a}$ perpendicular to the direction of propagation of the auxiliary paper layers 12 and 14, a small phase displacement $\varphi$ is provided between the waves of these layers, conf. Fig. 1. $\varphi$ is in the range of $\frac{\pi}{4} < \varphi < \frac{\pi}{3}$. The plane paper layer 15 is optional.

In the auxiliary paper layers 12 and 14, at least the waves presenting an amplitude perpendicular to the plane of propagation of the packaging material may be provided with rather flat sides in such a manner that said waves are substantially serrated. The serrations can be provided with slightly rounded tops and bottoms, viz. triangularly wavy.

The waves presenting the amplitude perpendicular to the plane of propagation of the packaging material may also be substantially of a square wavy shape.

The packaging material according to the invention is advantageous in presenting a high flexural rigidity and a high capacity of absorbing impacts. In addition, the material presents a high tear resistance because the possibility of tearing up the material along the waves has been highly reduced or eliminated. Furthermore, the material is advantageous in including folding lines which are always distinct because they always continue across the ridges which is an important feature in connection with a mechanical packing of articles. The washboard effect is minimized. Furthermore, the material is very suited for being provided with a graphical print The material turned out to be particularly suited for packing plane furniture parts. Finally it should be noted that by using the packaging material according to the invention in connection with a packing machine it is possible to use the latter in a more efficient way.

Each plane paper layer can, of course, be of a weight in grammes per $m^2$, which deviates from the weight in grammes per $m^2$ of each single auxiliary paper layer.

The invention may be modified in many ways without thereby deviating from the scope of the invention.

## Claims

1. A packaging material of the corrugated cardboard type made by gluing together a plane paper layer (11) and an auxiliary paper layer (12) with waves presenting an amplitude (a) perpendicular to the plane ofpropagation of the auxiliary paper layer, and where the wave tops form a system of substantially parallel waves (10, 10', 10") presenting an amplitude (b) in the plane of propagation of said auxiliary paper layer (13), a second plane paper layer (13) being arranged below said auxiliary paper layer (12), **characterised in, that** it comprises a second auxiliary paper layer (14) arranged below said second plane paper layer (13) and optionally a third plane paper layer (15) and **in that** as far as the waves are concerned which present an amplitude perpendicular to the direction of propagation of the two auxiliary paper layers (12, 14), a phase displace ment φ is provided between the waves of these layers, φ being in the range of $\frac{\pi}{4}$ - $\frac{\pi}{3}$.

2. A packaging material according claim 1, **characterised in, that** the waves of at least one type of waves on the auxiliary paper layers (12, 14) are rather flat on the sides in such a manner that the waves are of a substantially serrated shape, viz. triangular waves with tops and bottoms which are optionally slightly rounded, or the waves can be substantially "square", viz. square waves.

3. A packaging material according to claim 1, **characterised in, that** the surface of each auxiliary paper layer (12,14) follows a face substantially corresponding to the mathematical functional expression:

$$z(x,y) = a\sin(\frac{2\pi}{\lambda_1} x + \frac{\pi}{2} + b\sin\frac{2\pi}{\lambda_2}y)$$

where a and $\lambda_1$ represent the amplitude and the wavelength, respectively, of the waves perpendicular to the plane of propagation of the auxiliary paper layer, and where b and $\lambda_2$ represent the amplitude and the wavelength, respectively, of the waves in the plane of said auxiliary paper layer, viz. the plane of propagation, and that the ratio $\frac{a}{b}$ of the amplitudes for the two types of waves may be in the range of 0.10 to 0.60, preferably 0.15 to 0.50, especially 0.22 corresponding to a = 0.5 mm and b = 2.25 mm.

4. A packaging material according to one or more of the claims 1 to 3, **characterised in, that** the ratio $\frac{\lambda_1}{\lambda_2}$ of the wavelengths for the two types of waves is in the range of 0.09 to 0.20 and preferably is approximately 0.15 corresponding to $\lambda_1$ = 3.5 mm and $\lambda_2$ = 23.5 mm.

5. A packaging material according to claim 2, **characterised in, that** the plane paper layers (11, 13) and the auxiliary paper layers (12,14) are of the same thickness, preferably between 0.05 and 0.3 mm, such as 0.1 mm, and that the auxiliary paper layers (3) is of a weight of 50 to 250 $g/m^2$, especially 70 to 150 $g/m^2$.

6. A packaging material according to claim 1 or 2, **characterised in, that** starch-based or cold-water glue is used for the lamination of the layers.

**Patentansprüche**

1. Verpackungsmaterial aus Wellpappe, das durch Zusammenkleben einer ebenen Papierschicht (11) und einer Hilfspapierschicht (12) mit Wellen hergestellt wird, wobei die Wellen eine Amplitude (a) darstellen, die senkrecht zu der Ausbreitungsebene der Hilfspapierschicht ist, und wobei die Wellenspitzen ein System von im Wesentlichen parallelen Wellen (10, 10', 10'') bilden, die eine Amplitude (b) in der Ausbreitungsebene der Hilfspapierschicht (12) darstellen, wobei eine zweite ebene Papierschicht (13) unter der Hilfspapierschicht (12) angeordnet ist, **dadurch gekennzeichnet, dass** es eine zweite Hilfspapierschicht (14), die unter der zweiten ebenen Papierschicht (13) angeordnet ist, und wahlweise eine dritte ebene Papierschicht (15) aufweist, und **dadurch**, dass soweit die Wellen betroffen sind, die eine Amplitude senkrecht zu der Ausbreitungsrichtung der zwei Hilfspapierschichten (12, 14) darstellen, eine Phasenverschiebung φ zwischen den Wellen dieser Schichten vorgesehen ist, wobei φ in dem Bereich von π/4 bis π/3 liegt.

2. Verpackungsmaterial nach Anspruch 1, **dadurch gekennzeichnet, dass** die Wellen von zumindest einer Wellenart an den Hilfspapierschichten (12, 14) an den Seiten eher flach sind, derart, dass die Wellen eine im Wesentlichen gezahnte Form aufweisen, das heißt dreieckige Wellen mit Spitzen und Tälern die wahlweise leicht gerundet sind, oder die Wellen können im Wesentlichen "rechteckig" sein, das heißt rechteckige Wellen.

3. Verpackungsmaterial nach Anspruch 1, **dadurch gekennzeichnet, dass** die Oberfläche von jeder Hilfspapierschicht (12, 14) einer Fläche folgt, die im Wesentlichen dem mathematischen funktionellen Ausdruck:

$$z(x, y) = a \sin\left(\frac{2\pi}{\lambda_1} x + \frac{\pi}{2} + b \sin \frac{2\pi}{\lambda_2} y\right)$$

entspricht, wobei a und $\lambda_1$ die Amplitude beziehungsweise die Wellenlänge der Wellen senkrecht zu der Ausbreitungsebene der Hilfspapierschicht darstellen, und wobei b und $\lambda_2$ die Amplitude beziehungsweise die Wellenlänge der Wellen in der Ebene der Hilfspapierschicht, das heißt der Ausbreitungsebene, darstellen, und dass das Verhältnis a/b der Amplituden für die zwei Wellenarten in dem Bereich von 0,10 bis 0,60 liegen kann, vorzugsweise 0,15 bis 0,50, insbesondere 0,22, das a = 0,5 mm und b = 2,25 mm entspricht.

4. Verpackungsmaterial nach einem oder mehr der Ansprüche 1 bis 3, **dadurch gekennzeichnet, dass** das Verhältnis $\lambda_1/\lambda_2$ der Wellenlängen für die zwei Wellenarten in dem Bereich von 0,09 bis 0,20 liegt, und vorzugsweise ungefähr 0,15 beträgt, das $\lambda_1$ = 3,5 mm und $\lambda_2$ = 23,5 mm entspricht.

5. Verpackungsmaterial nach Anspruch 2, **dadurch gekennzeichnet, dass** die ebenen Papierschichten (11, 13) und die Hilfspapierschichten (12, 14) die gleiche Dicke aufweisen, vorzugsweise zwischen 0,05 und 0,3 mm, beispielsweise 0,1 mm, und dass die Hilfspapierschichten (12, 14) ein Gewicht von 50 bis 250 g/m$^2$, insbesondere 70 bis 150 g/m$^2$, aufweisen können.

6. Verpackungsmaterial nach Anspruch 1 oder 2, **dadurch gekennzeichnet, dass** Klebstoff auf Stärkebasis oder Kaltwasser-Klebstoff für die Laminierung der Schichten verwendet wird.

**Revendications**

1. Matériau d'emballage du type en carton ondulé réalisé par collage d'une couche de papier plane (11) et d'une couche de papier auxiliaire (12) avec des ondes présentant une amplitude (a) perpendiculaire au plan de propagation de la couche de papier auxiliaire, et où les sommets des ondes forment un système d'ondes sensiblement parallèles (10, 10', 10'') présentant une amplitude (b) dans le plan de propagation de ladite couche de papier auxiliaire (13), une deuxième couche de papier plane (13) étant agencée au-dessous de ladite couche de papier auxiliaire (12), **caractérisé en ce qu'**il comprend une deuxième couche de papier auxiliaire (14) agencée audessous de ladite deuxième couche de papier plane (13) et éventuellement une troisième couche de papier plane (15) et **en ce que**, en ce qui concerne les ondes qui présentent une amplitude perpendiculaire à la direction de propagation des deux couches de papier auxiliaires (12, 14), un déplacement de phase φ est produit entre les ondes de ces couches, φ se trouvant dans la plage de π/4 à π/3.

**2.** Matériau d'emballage selon la revendication 1, **caractérisé en ce que** les ondes d'au moins un type d'ondes sur les couches de papier auxiliaires (12, 14) sont relativement plates sur les côtés, de manière à ce que les ondes soient de forme sensiblement dentelée, c'est-à-dire des ondes triangulaires avec des sommets et des bas qui sont éventuellement légèrement arrondis, ou les ondes peuvent être sensiblement "carrées", c'est-à-dire des ondes carrées.

**3.** Matériau d'emballage selon la revendication 1, **caractérisé en ce que** la surface de chaque couche de papier auxiliaire (12, 14) suit une face correspondant sensiblement à l'expression fonctionnelle mathématique :

$$z(x,y) = a\sin(\frac{2\pi}{\lambda_1} x + \frac{\pi}{2} + b\sin\frac{2\pi}{\lambda_2}y)$$

où a et $\lambda_1$ représentent l'amplitude et la longueur d'onde, respectivement, des ondes perpendiculaires au plan de propagation de la couche de papier auxiliaire, et où b et $\lambda_2$ représentent l'amplitude et la longueur d'onde, respectivement, des ondes dans le plan de ladite couche de papier auxiliaire, c'est-à-dire le plan de propagation, et **en ce que** le rapport a/b des amplitudes pour les deux types d'ondes peut se situer dans la plage de 0,10 à 0,60, de préférence de 0,15 à 0,50, spécialement 0,22, ce qui correspond à a = 0,5 mm et b = 2,25 mm.

**4.** Matériau d'emballage selon une ou plusieurs des revendications 1 à 3, **caractérisé en ce que** le rapport $\lambda_1/\lambda_2$ des longueurs d'onde pour les deux types d'ondes se situe dans la plage de 0,09 à 0,20, et est de préférence approximativement de 0,15, ce qui correspond à $\lambda_1$ = 3,5 mm et $\lambda_2$ = 23,5 mm.

**5.** Matériau d'emballage selon la revendication 2, **caractérisé en ce que** les couches de papier planes (11, 13) et les couches de papier auxiliaires (12, 14) ont la même épaisseur, de préférence comprise entre 0,05 et 0,3 mm, par exemple 0,1 mm, et **en ce que** les couches de papier auxiliaires (3) ont un poids de 50 à 250 g/m$^2$, spécialement de 70 à 150 g/m$^2$.

**6.** Matériau d'emballage selon la revendication 1 ou 2, **caractérisé en ce que** de la colle amidonnée ou à l'eau froide est utilisée pour la stratification des couches.

Fig. 1

Fig. 2